Europäisches Patentamt

**European Patent Office**

Office européen des brevets

(19)

(11) Veröffentlichungsnummer: **0 115 592**
**B1**

(12) ## EUROPÄISCHE PATENTSCHRIFT

(45) Veröffentlichungstag der Patentschrift:
**19.11.87**

(21) Anmeldenummer: **83112300.5**

(22) Anmeldetag: **07.12.83**

(51) Int. Cl.⁴: **F 16 B  12/24,** F 16 B  7/00

(54) Zapfenverbindung für Holzgestelle.

(30) Priorität: **03.02.83  DE 3303650**

(43) Veröffentlichungstag der Anmeldung:
**15.08.84 Patentblatt 84/33**

(45) Bekanntmachung des Hinweises auf die Patenterteilung:
**19.11.87 Patentblatt 87/47**

(84) Benannte Vertragsstaaten:
**AT BE CH FR GB IT LI NL SE**

(56) Entgegenhaltungen:
**DE - C - 604 151**
**FR - A - 905 238**
**FR - A - 2 205 961**
**GB - A - 489 816**
**US - A - 4 111 577**

(73) Patentinhaber: **Drabsch, Karl Stefan, Berglerschleife 3-7,**
**D-8481 Pleystein/Opf. (DE)**

(72) Erfinder: **Drabsch, Karl Stefan, Berglerschleife 3-7,**
**D-8481 Pleystein/Opf. (DE)**

(74) Vertreter: **Kohlmann, Karl Friedrich et al, Hoffmann, Eitle**
**& Partner Arabellastrasse 4 (Sternhaus),**
**D-8000 München 81 (DE)**

**Beschreibung**

Die Erfindung betrifft eine Zapfenverbindung von zwei Teilen von Holzgestellen, insbesondere Massivholz-Stollenkonstruktionen wie Tische, Stühle und Korpuselemente. Die Zapfenverbindung wird gebildet von mehreren, angefrästen Zapfen von quadratischem Querschnitt am ersten Teil und in gleicher Anzahl und Anordnung vorgesehenen runden Bohrungen im zweiten Teil, in welche die Zapfen eingepresst und eingeleimt sind. Dabei ist die Länge der Diagonalen des den Querschnitt der Zapfen bildenden Quadrats grösser als der Durchmesser der runden Bohrungen, so dass zwischen den Zapfen- und Bohrungswänden vier mit Leim gefüllte Segmente vorhanden sind.

Derartige Zapfenverbindungen von Holzgestellen können sowohl Zug- als auch Hebelkräfte aufnehmen. Dem jeweiligen Verwendungszweck entsprechend und aus formalen Gründen sind die verwendeten Holzprofile im allgemeinen gering dimensioniert. Es ist deshalb schwierig, unter Berücksichtigung des engen, zur Verfügung stehenden Raumes eine Zapfenverbindung vorzusehen, welcher die Teile des Holzgestells ausreichend stabil verbindet. Ausserdem muss die wirtschaftliche Nutzung des Holzes und eine möglichst einfache Herstellbarkeit der Zapfenverbindung mitberücksichtigt werden. Die Festigkeit von derartigen Zapfenverbindungen ist abhängig vom Verhältnis der Zapfenstärke zur Zapfenlänge, vom Gesamtquerschnitt der für eine Verbindung vorgesehenen Zapfen, von der Zapfenform sowie von der durch die Zapfengrösse und deren Oberfläche gegebenen Verleimmöglichkeit. Die Festigkeit der Zapfenverbindung hängt ferner von der Form und Grösse der zugehörigen Zapfenlöcher ab. Ein möglichst grosser einzelner Zapfen, gleich welcher Form, wird zwangsläufig ein ungünstigeres Verhältnis zwischen Stärke und Länge aufweisen als aus dem Holzprofil geschnittene oder gefräste Mehrfachzapfen gleicher Zapfenlänge, welche in eine entsprechende Anzahl von korrespondierenden Zapfenlöchern eingreifen. Geringere, für die Verleimung zur Verfügung stehende Oberfläche und eine grössere Schwächung des Holzprofils im Bereich des einzelnen Zapfenlochs sind weitere Nachteile einer Zapfenverbindung mittels Einzelzapfens.

Vergleichbare Mehrfachzapfen haben allerdings zunächst einen geringeren Gesamtquerschnitt als ein möglichst grosser Einzelzapfen, da die Mehrfachzapfen ja durch Teilung des Einfachzapfens entstehen. Dennoch kann mit Mehrfachzapfen eine grössere Festigkeit der Zapfenverbindung erreicht werden, da eine wesentlich wirkungsvollere Durchdringung der beiden zu verbindenden Holzprofile stattfindet. Hieraus ergibt sich ein günstigeres Verhältnis zwischen Stärke und Länge der Mehrfachzapfen und überdies eine grössere Gesamtoberfläche der Verbindungszapfen. Zug- und Hebelkräfte werden dadurch besser aufgefangen.

Es besteht ferner das Problem, dass beim Zusammenfügen und Verleimen einer Zapfenverbindung der aufgetragene Leim bei gut ineinander passende Zapfen abgestreift wird, was zu mangelhafter Verleimung führt. Dem kann zwar durch eine Prägung oder Riffelung der Zapfenoberfläche begegnet werden; derartige Oberflächengestaltungen sind aber technisch umso schwieriger herstellbar, je mehr Zapfen für eine einzige Zapfenverbindung verwendet werden. Bei sehr enger, mehrreihiger Zapfenanordnung ist eine derartige Oberflächenstruktur maschinell gänzlich undurchführbar. Prägungen oder Riffelungen müssen jedenfalls immer in einem zusätzlichen Arbeitsgang hergestellt werden, was die Herstellungskosten eines fertigen Holzgestells erhöht.

Mit der FR-A-905 238 ist nun eine Holzkonstruktion aus zwei miteinander verbundenen Teilen für die Herstellung von Fensterrahmen und vergleichbaren Gegenständen bekannt geworden. Das erste der beiden zu verbindenden Fensterrahmen-Teile besitzt stirnseitig angefräste Zapfen von quadratischem Querschnitt, welche in einer einzigen Reihe nebeneinander angeordnet sind. Das andere Teil des Fensterrahmens weist in gleicher Anzahl und Anordnung zylindrische Bohrungen auf, in welche die Zapfen einpressbar sind. Diese vorbekannte, speziell für Fensterrahmen entwickelte Zapfenverbindung ist für hoch beanspruchte Holzgestelle, wie Tische und Stühle, wenig geeignet. Die hohen Anforderungen an Stabilität und Dauerhaftigkeit, welche an eine Verbindung von zwei Teilen eines derartigen, hoch beanspruchten Holzgestells gestellt werden müssen, lassen sich mit einer nur einreihigen Anordnung von quadratischen Zapfen nicht erfüllen. Es ergeben sich sogar geringere Festigkeiten, als sie mit einer herkömmlichen Verbindung mittels Einfach- oder Doppelschlitzzapfen erreicht werden. Dies rührt daher, dass die insgesamt wirksame Querschnittsfläche, die letztendlich für die Festigkeit massgebend ist, bei der einreihigen Zapfenverbindung gemäss FR-A-905 238 geringer ist als bei einer massiven Einfach-Zapfenverbindung auf vergleichbarem Raum.

Aufgabe vorliegender Erfindung ist es daher, eine Mehrfachzapfenverbindung zu schaffen, deren Stabilität wesentlich erhöht ist, so dass sie auch bei hoch beanspruchten Gestellkonstruktionen einsetzbar ist, die technisch maschinell leicht herstellbar und überdies einfach und sicher montierbar ist.

Bei der Lösung dieser Aufgabe wird ausgegangen von einer Zapfenverbindung der eingangs erwähnten Art; gelöst wird die Aufgabe gemäss dem kennzeichnenden Teil des ersten Patentanspruchs dadurch, dass die Zapfen und entsprechend die Bohrungen in mehreren, zueinander parallelen Reihen nebeneinander angeordnet sind, wobei jede Reihe mehrere Zapfen aufweist, und dadurch, dass die Bohrungen konisch oder zylindrisch angesenkt sind.

Durch die Anordnung der Zapfen in mehreren, zueinander parallelen Reihen ergibt sich eine wesentliche Verbesserung der Festigkeit der erfindungsgemässen Zapfenverbindung. Auch die mehrreihig angeordneten Zapfen lassen sich in einfacher Weise durch Anfräsen herstellen. Das Einbringen einer oder mehrerer zusätzlicher Reihen von korrespondierenden Bohrungen in das zweite Teil des Holzgestells ist ohnehin kein fertigungstechnisches Problem. Die erfindungsgemässe Zapfenverbindung zeichnet sich durch ein ausserordentlich hohes Mass an Stabilität und Dauerhaftigkeit aus, so dass sie insbesondere beim Bau hoch beanspruchter Möbel hervorragend verwendbar ist. Die konische oder zylindrische Ansenkung der Bohrungen erleichtert das Einstecken der Zapfen. Mit der erfindungsgemässen Zapfenverbindung lassen sich deshalb zwei Teile von Holzgestellen schnell und sicher verbinden.

Bei einer bevorzugten Ausführung der Zapfenverbindung sind zwei parallele Reihen von Zapfen vorgesehen, wodurch sich besonders gute Ergebnisse hinsichtlich Festigkeit und Dauerhaftigkeit der Verbindung ergeben.

Eine konische Ausformung der Zapfen und der Bohrungen selbst erleichtert nochmals das Einstecken der Zapfen und ergibt einen besonders guten Presssitz.

Ein Ausführungsbeispiel der Erfindung wird nachstehend anhand der beigefügten Zeichnungen näher erläutert. Es zeigen:

Fig. 1 einen Tischfuss mit über Eck angeordneten 8 bzw. 6 Mehrfachbohrungen;
Fig. 2 jeweils Tischzargen mit 8 bzw. 6 quadratischen Zapfen zur Einführung in die Bohrungen im Tischfuss von Fig. 1;
Fig. 3 eine Bohrung mit eingepresstem Zapfen, in einem Längsschnitt; und
Fig. 3A die Bohrung mit eingepresstem Zapfen von Fig. 3, in einem Querschnitt.

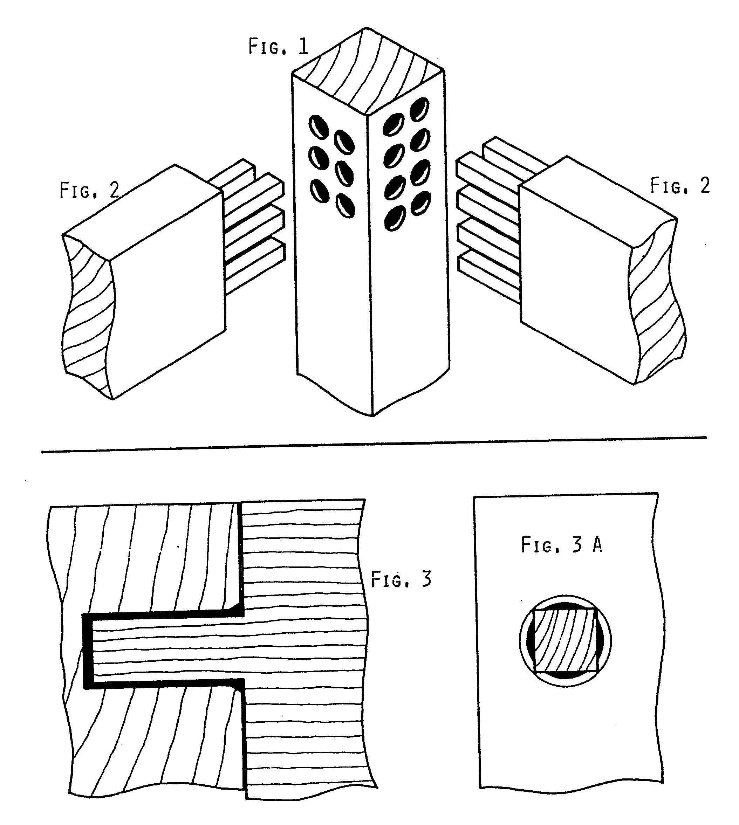

Der in Figur 1 gezeigte Tischfuss ist an zwei Seiten über Eck mit 8 bzw. 6 Mehrfachbohrungen mit jeweils 9,5 mm Durchmesser versehen. Die Mehrfachbohrungen sind in zwei Reihen versetzt angeordnet. Der Abstand zwischen zwei Bohrungen beträgt 16 mm, die Bohrtiefe 41 mm.

Die in den Figuren 2 dargestellten Tischzargen sind mit 8 bzw. 6 quadratischen Zapfen von 8 mm Kantenlängen versehen. Diese Zapfen sind so angeordnet, dass sie im Achsabstand genau in die Bohrungen des Tischfusses (vgl. Figur 1) passen. Die Zapfenlänge beträgt 40 mm.

In Figur 3 ist die konische Ansenkung der Bohrungen im Tischfuss gut erkennbar. Fig. 3A zeigt deutlich die offenen Segmente zwischen der Wandung einer Bohrung und dem zugehörigen quadratischen Zapfen. Diese offenen Segmente ermöglichen ein Zurückströmen des Leimes nach dem Einpressen des Zapfens in die Bohrung.

## Patentansprüche

1. Zapfenverbindung von zwei Teilen von Holzgestellen, insbesondere Massivholz-Stollenkonstruktionen wie Tische, Stühle und Korpuselemente, mit
- mehreren, angefrästen Zapfen von quadratischem Querschnitt am ersten Teil, und
- in gleicher Anzahl und Anordnung vorgesehenen runden Bohrungen im zweiten Teil, in welche die Zapfen eingepresst und eingeleimt sind,
- wobei die Länge der Diagonalen des den Querschnitt der Zapfen bildenden Quadrats grösser ist als der Durchmesser der runden Bohrungen, so dass zwischen den Zapfen- und Bohrungswänden vier mit Leim gefüllte Segmente vorhanden sind, dadurch gekennzeichnet, dass
- die Zapfen und entsprechend die Bohrungen in mehreren, zueinander parallelen Reihen nebeneinander angeordnet sind, wobei jede Reihe mehrere Zapfen aufweist, und
- die Bohrungen konisch oder zylindrisch angesenkt sind.

2. Zapfenverbindung nach Anspruch 1, dadurch gekennzeichnet, dass zwei parallele Reihen von Zapfen vorgesehen sind.

3. Zapfenverbindung nach Anspruch 1 oder 2, dadurch gekennzeichnet, dass die Zapfen und die Bohrungen jeweils konisch geformt sind.

## Claims

1. Pinnet joint for two members of wooden frames, in particular solid wood – thick sectioned constructions such as tables, chairs and furniture frames, having a plurality of milled-out pins of quadratic cross-section on the first member, and the same number and arrangement of round socket in the second member, into which the pins are pressed and glued, the length of the diagonals of the square forming the cross-section of the pins being greater than the diameter of the round sockets such that four spaces filled with glue are present between the pin and socket surfaces, characterized in that the pins and correspondingly the sockets are arranged alongside each other in a plurality of rows parallel to each other, each row having several pins and the sockets are conically or cylindrically counter bored.

2. Pinnet joint according to claim 1, characterized in that two parallel rows of pins are provided.

3. Pinnet joint according to claims 1 or 2, characterized in that the pins and the sockets are both formed conically.

## Revendications

1. Assemblage à mortaises et à tenons de deux parties de structures en bois, en particulier de structures en bois massif, telles que tables, chaises et autres éléments, comprenant:
- plusieurs tenons fraisés de section transversale carrée sur la première partie, et
- des mortaises rondes, en même nombre et de même disposition, prévues dans la seconde partie et dans lesquelles les tenons sont emmanchés à force et collés,
- la longueur des diagonales du carré formant la section transversale des tenons étant plus grande que le diamètre des mortaises rondes de telle sorte qu'entre les parois des tenons et des mortaises, il subsiste quatre segments remplis de colle, caractérisé par le fait que:
– les tenons, et par conséquent les mortaises, sont disposés les uns à côté des autres en plusieurs rangées parallèles entre elles, chaque rangée comportant plusieurs tenons, et

– les mortaises sont chanfreinées coniquement ou cylindriquement.

2. Assemblage à mortaises et à tenons selon la revendication 1, caractérisé par le fait qu'il est prévu deux rangées parallèles de tenons.

3. Assemblage à mortaises et à tenons selon la revendication 1 ou 2, caractérisé par le fait que les tenons et les mortaises sont respectivement façonnés coniques.

FIG. 1

FIG. 2

FIG. 2

FIG. 3

FIG. 3 A